# EUROPEAN PATENT SPECIFICATION

(11) **EP 4 641 147 B1**
(45) Date of publication and mention of the grant of the patent: **11.11.2026**
(21) Application number: 24172380.8
(22) Date of filing: 25.04.2024
(51) Int. Cl.: G01F 17/00, G01F 22/02, G01F 25/00

(54) **LIQUID HANDLING CALIBRATION DEVICE AND ASSOCIATED METHOD OF CALIBRATION**
KALIBRIERVORRICHTUNG FÜR FLÜSSIGKEITSHANDHABUNG UND ZUGEHÖRIGES KALIBRIERVERFAHREN
DISPOSITIF D'ÉTALONNAGE DE MANIPULATION DE LIQUIDE ET PROCÉDÉ D'ÉTALONNAGE ASSOCIÉ

(43) Date of publication of application: 29.10.2025
(73) Proprietor: UniPix Sàrl, 1028 Préverenges (CH)
(72) Inventor: Renaud, Philippe, 1028 Préverenges (CH); Bertrand, Daniel, 1247 Anières (CH); Möller, Andreas, Tübingen (DE); Boven, Karl-Heinz, Wannweil (DE)
(74) Representative: Bovard SA Neuchâtel

(56) References cited:
- EP-A1- 3 608 640
- JP-A- S61 232 833
- US-A1- 2010 286 932
- BONZON D ET AL: "Micropipette calibration by differential pressure measurements", MEASUREMENT SCIENCE AND TECHNOLOGY, IOP, BRISTOL, GB, vol. 30, no. 10, 8 August 2019 (2019-08-08), pages 105003, XP020343388, ISSN: 0957-0233, [retrieved on 20190808], DOI: 10.1088/1361-6501/AB162B

## Description

### Technical Field

The invention relates to the field of handling liquid and solid substances more particular to a method of calibrating aspired volumes of liquids and/or solid substances. The invention relates also to a volume calibration device and a system configured to calibrate the volume of aspired substances, such as liquids, and a system which is suitable to carry out the method.

### Background of the art

The precise measurement of the volume of aspired and/or dispensed liquid, solid or gaseous substances is important in several fields, in particular in the field of chemistry and biology in which the aspired volumes are most of the time small, typically less than 1000 µl. Today's standard calibration methods for laboratory suction devices, such as pipettes, is mainly based on a gravimetrical method which comprises the precise weighting of the dispensed liquid by the laboratory precision scale. The majority of pipettes on the market have full range displacement comprised 10µl and 1000µl. Most common categories are 10µl, 20µl, 100µl, 200µl and 1000µl.

Alternatively, calibration of liquid dispenser can be performed using the principle of dilution of a colored or fluorescent solution into a known volume of water. The dilution methods require the use of well-characterized test solutions and known and precise volume of solvent sample. It also requires a very accurate optical sensing device that needs itself regular calibration.

The specifications of laboratory liquid handling devices, such as pipettes, are guided by the norm ISO 8655. This norm imposes a systematic error typically below 1% of displacement and a random error below 0.4% for maximal range of the pipette. These error values can be higher for small volumes. The required precision for the measurement of volumetric displacement is in the order of 0.1µl. This imposes (density of water) an accuracy of 0.1 mg in weighting the substance, typically a liquid. The calibration process requires: 1) an accurate scale, 2) compensation of errors due to temperature, 3) avoiding evaporation of liquid and 4) a series of very careful manipulations.

The users of laboratory pipettes, depending on their accuracy constraints, must regularly check and calibrate their pipettes. As the calibrations need specific skills, the users often subcontract this task to external service providers. The cost of calibration is therefore a non-negligible part of the cost of ownership of laboratory pipettes.

The majority of existing or disclosed products are based on laboratory scales and require very careful handling and weighting of liquids. There exist at least two products called "pipette testers" that are based on the measurement of the leak rate when the pipette is pressurized and which are described in the following internet references 1-2:
https://www.brandtech.com/product/plt-pipette-leak-testing-unit/
https://www.aandd.jp/products/test_measuring/pipette/ad1690.html

The leak checking allows the rejection of leaky pipettes, but is not a measurement of the volumetric precision, as it is required by the ISO 8655. Therefore, the gravimetric calibration method is still needed to qualify the pipettes.

The document US2012/0240663 describes a method for leak-testing hand-held piston strike pipettes and an associated leak-testing apparatus. The system and method described in US2012/0240663 allows to detect leakage in single-channel and multichannel piston stroke pipettes by using a pressure sensor and a vacuum pump and consist in measuring pressure raise after stopping or disconnecting the vacuum pump, the system and method does not provide a solution for measuring accurately the aspired volumes by the pipettes.

The document US3962916 describes a complicated system comprising a plurality of electronic controlled fluidic gates for the measurement of a closed air space but would be unsuitable to calibrate precisely a small volume of an aspired liquid. It is based on the use of a regulated gas supply that is needed to generate a reference pressure.

Document US8561459 describes a volume gauge comprising a chamber comprising a pressure changing device coupled to said chamber. The pressure changing device is configured to change a pressure and to measure a gas pressure of air located in the chamber. A processor having a memory stored with the total volume of the chamber and a reference pressure corresponding to an empty chamber is provided. Based on received pressure measurement data, the processor may determine the percentage volume occupied by a solid or liquid substance. Although the system disclosed in US2012/0240663 allows determining approximately the volume of a solid or liquid substance, the system is not very fast and is not accurate and may achieve at best a precision of about 1%. Also, the system is complex as requiring a pressure control system. Furthermore, in order to achieve higher accuracies, the system of US2012/0240663 would need a compensation correction for temperature variations. Also, evaporation of the liquid may be an additional source of inaccuracy.

Document "Micropipette calibration by differential pressure measurements" by Bonzon D et al, published on 08-08-2019 in journal MEASUREMENT SCIENCE AND TECHNOLOGY, IOP, BRISTOL, GB, vol. 30, no. 10, 105003 (10 pp), ISSN: 0957-0233, DOI: 10.1088/1361-6501/AB162 discloses a volumetric displacement calibration device from the prior art.

Therefore, a better system than the ones available from prior art is required. The system should be simpler, cheaper and faster and be more reliable than existing devices. Furthermore, the precision should be at least as good or better than the precision of known liquid weighting method, which is the reference method used in the ISO standard.

There is also a requirement to be able to determine volumetric effects due to some parts of a calibration system such as the use of valves. It is also desirable to provide a system that allows to take into account effects due to hydrostatic pressure in an aspiration system.

Additionally, there is a need for a new system so that the user can easily perform calibration as often as desired without the need of a precise scale and possibly without liquid or sample solution. The new system should also be adaptable to test, in parallel, a plurality of aspiration systems during the same calibration procedure.

A new method and system should reduce the cost of ownership of laboratory pipettes and increase quality control because of its ease of use. None of the cited requirements can be achieved by existing or disclosed precise volume measurement systems.

### Summary of the invention

The invention proposes a new liquid handler calibration method and a system, configured to calibrate the volume of aspired and/or dispensed substances, such as liquids, which solve the limitations of devices and calibration methods of prior art. The calibration method and device does not require liquid sample handling and is based on the measurement of gas displacement volume through the pressure change inside a closed volume. Available barometric pressure sensors have an absolute accuracy below 0.1mbar and a short-term repeatability below 0.02mbar. As the relative change of pressure is equal to the relative change volume, typical 0.1% absolute accuracy can be reached in displacement measurements.

The gas volume calibration method is at least as accurate as existing liquid weighting methods but it is much simpler and much faster and cheaper. Moreover, there is no need to compensate for temperature variation effects and the system does not need to avoid evaporation. Contrary to known weighting calibration techniques the user can easily perform calibration as often as desired without the need of a precise scale. In addition, as the system uses no liquid, the user can verify the functionality of the pipette and tip prior to a given measurement. The new method of the invention reduces the cost of ownership of for example laboratory pipettes and increases the quality control because of its ease of use. In addition, the method allows e.g. the detection and characterization of pipetting failure and the need of seal replacement in liquid handler devices such as pipetting devices.

The invention is achieved by the device, system and method as described in the claims.

The calibration system and method of the invention allow to take into account the volumetric effects due to the use of valves in the calibration system. Furthermore, the system allows to take into account effects due to hydrostatic pressure in an aspiration system. In embodiments, the system and method of the invention allow to calibrate, in parallel, a plurality of aspiration systems during the same calibration procedure.

### Brief description of the drawings

Further details of the invention will appear more clearly upon reading the following description in reference to the appended figures:
- Figure 1 shows schematically a cross section of a pipette-type aspiration device, and its use;
- Figure 2 shows five usual steps in the use of a pipette-type aspiration device;

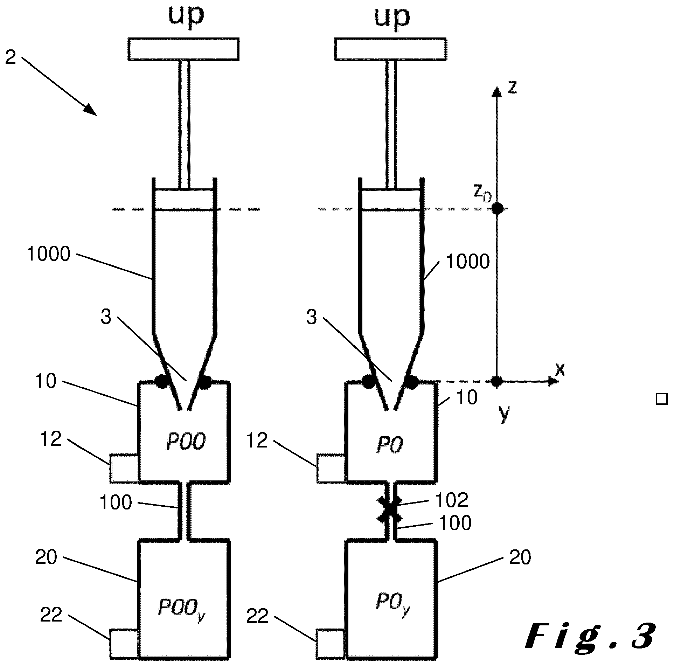

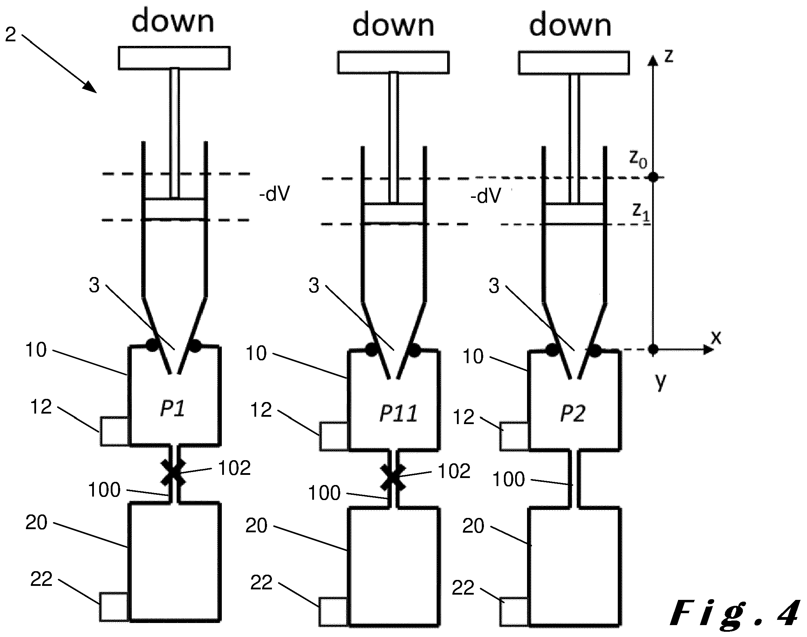

- Figures 3 and 4 illustrate the steps of a calibration method of a calibration system comprising a single aspiration device according to the invention;
- Figures 5 to 8 illustrate the steps of a calibration method of a calibration system comprising multiple aspiration devices according to the invention;

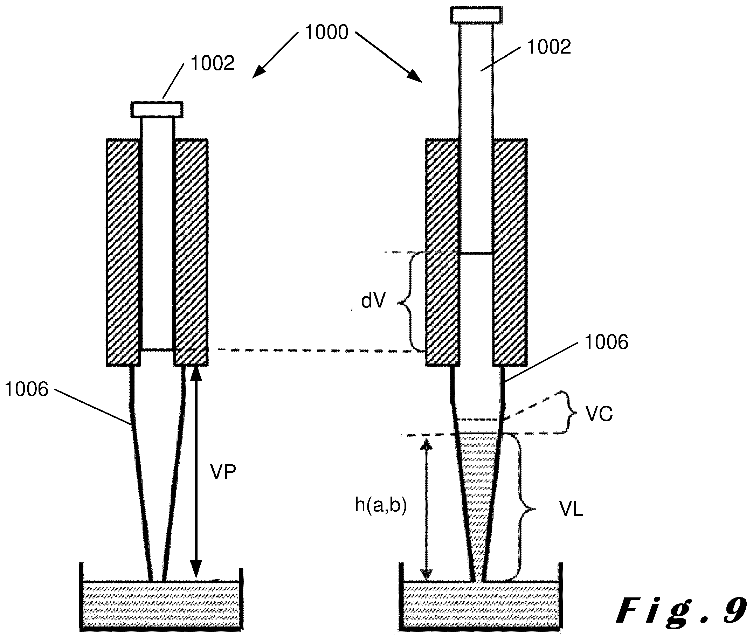

- Figure 9 illustrates the effect of hydrostatic pressure in an aspiration device, such as a pipette;
- Figure 10 illustrates a calibration system according to the invention;

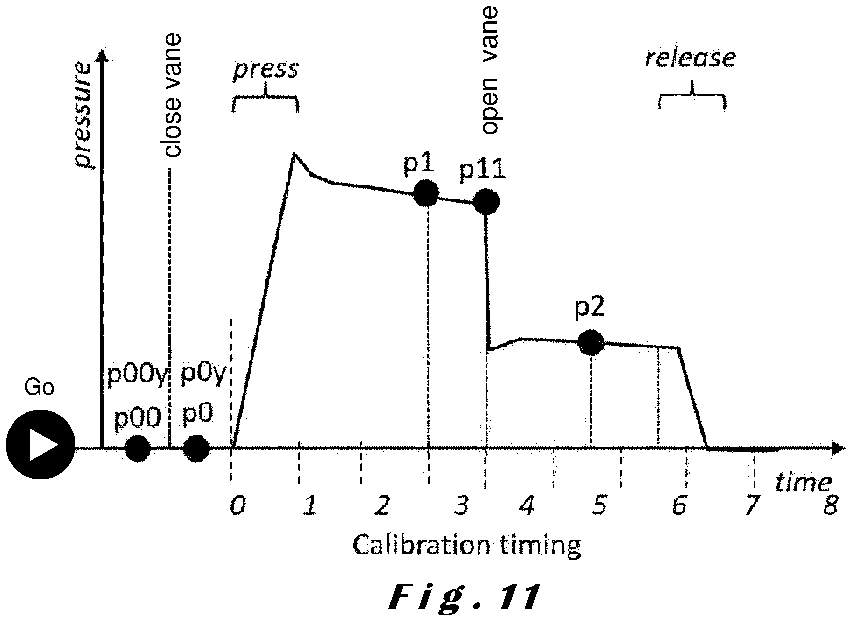

- Figure 11 shows schematically different steps in a calibration procedure of a liquid handling device according to the invention.

### Detailed description and embodiments of the invention

The present invention will be described with respect to particular embodiments and with reference to certain drawings. The drawings described are only schematic and are non-limiting. In the drawings, the size of some of the elements may be exaggerated and not drawn on scale for illustrative purposes. The dimensions and the relative dimensions do not correspond to actual reductions to the practice of the invention.

It is to be noticed that the term "comprising" in the description and the claims should not be interpreted as being restricted to the means listed thereafter, i.e., it does not exclude other elements.

Reference throughout the specification to "an embodiment" means that a particular feature, structure or characteristic described in relation with the embodiment is included in at least one embodiment of the invention. Thus appearances of the wording "in an embodiment", or, "in a variant", in various places throughout the description, are not necessarily all referring to the same embodiment, but several. In other instances, not all structures are shown in detail in order not to obscure an understanding of the description and/or the figures.

In a first aspect, the invention is achieved by a volumetric displacement calibration device 1 comprising at least one opening 3 configured to be able to adapt at least one suction system 1000, comprising a tip 1006, having a volume VP, connected to a shaft 1003 comprising a volume changing mechanism 1002 arranged to be movable between a distal position Z0 and a proximal position Z1, the proximal position Z1 being closer to said opening 3 than said distal position Z1. In an embodiment said least one suction system 1000 is a pipette and the volume changing mechanism 1002 is the piston of that pipette.

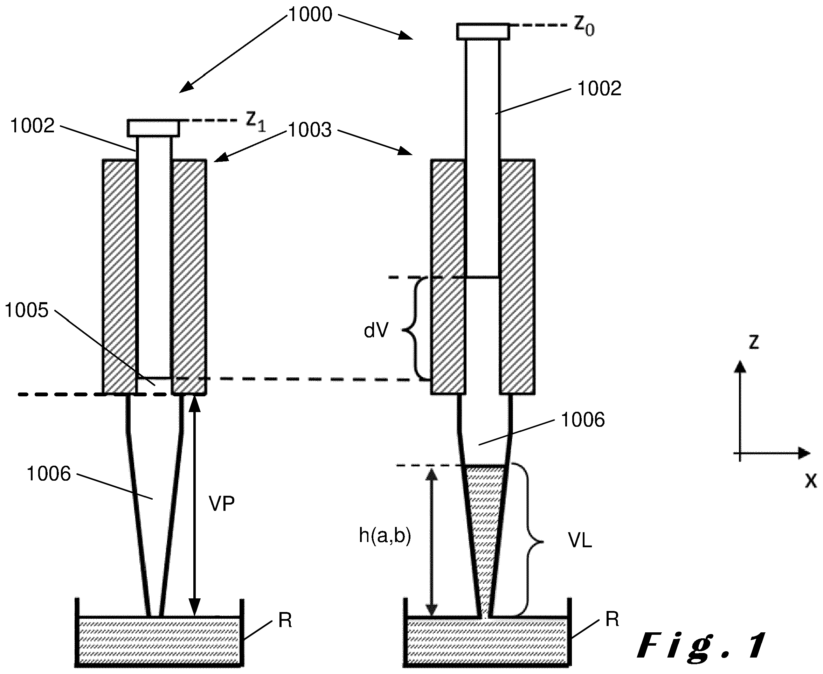

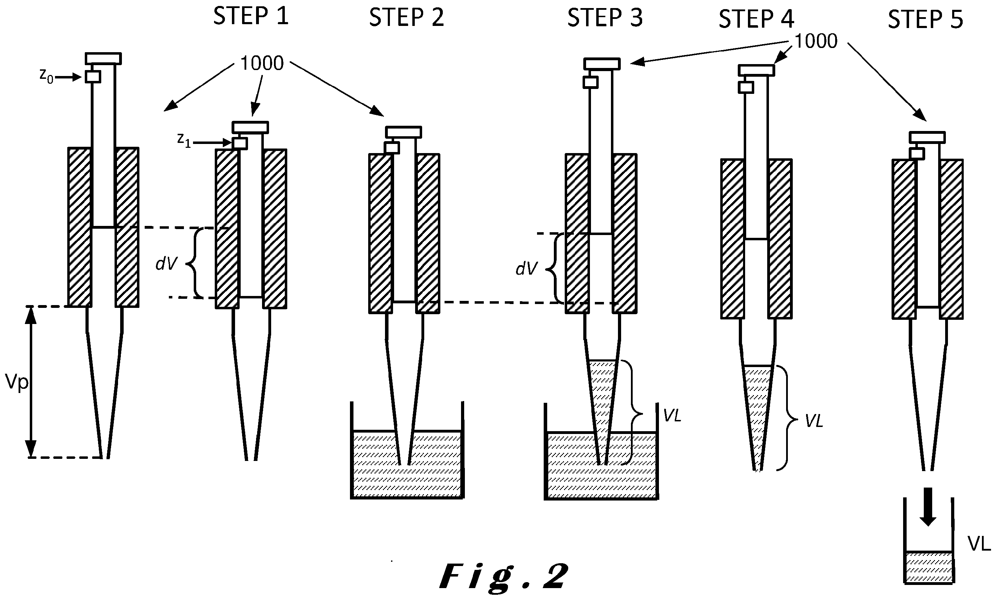

The shaft 1003 is typically an elongated tube defining a Z-axis. The negative sense of the Z-axis is defined as the sense from said distal position Z0 to said proximal position. The shaft 1003 has an internal volume that may be reduced to a remaining volume of air 1005 when the volume changing mechanism 1002 is pressed down, as illustrated in Figure 1. Figure 2 illustrates the main steps in the use of a pipette-type aspiration system.

The volumetric displacement calibration device 1 of the invention comprises:
- at least one main chamber 10 and one reference chamber 20, connected, by a conduct 100, to said main chamber 10;
- a valve 102 located on said conduct 100 and configured to be switchable between an open position, in which said main chamber 10 is in fluid communication with said reference chamber 20, and a closed position in which said main chamber 10 and said reference chamber 20 are not in fluid communication, the reference chamber 20 having a defined volume Vref when said valve 102 is closed;
- at least one first pressure sensor 12 connected to said main chamber 10 arranged to be able to measure:
   - at least one pressure P00 measured in said main chamber 10 when the volume changing mechanism 1002 is in said distal position Z0 and the valve 102 opened;
   - at least one pressure P0 measured in said main chamber 10, when the volume changing mechanism 1002 is in the distal position Z0 and the valve 102 closed;
   - at least one pressure P1 measured in said main chamber 10, when the volume changing mechanism 1002 is in said proximal position Z1 and the valve 102 closed; and
   - at least one pressure P2 measured in said main chamber 10, when the volume changing mechanism 1002 is in the proximal position Z1 and the valve 102 opened.

The volumetric displacement calibration device 1 is characterized in that it comprises:
- one second pressure sensor 22 connected to said reference chamber 20 and arranged to be able to measure:
   - at least one pressure P00y measured in said reference chamber 20 when the volume changing mechanism 1002 is in the distal position Z0 and the valve 102 opened;
   - at least one pressure P0y measured in said reference chamber 20 when the volume changing mechanism 1002 is in the distal position Z0, after closure of the valve 102;
- first calculation means designed to be able to calculate an internal volume Vo.

The determination of the parameter Vo is essential to the invention. This parameter Vo has the dimension of a volume and allows to provide the required calibration of the aspired volumes in the suction systems as described herein, such as pipettes.

Also, the determination of the parameter Vo is essential for determining leaks and/or to determine a compensation for hydrostatic pressures as will be described further.

The parameter Vo is defined as an internal volume and is the sum of the following 3 volumes:
- the volume VP of said tip 1006;
- the volume 1005 of the shaft 1003 of said at least one suction system 1000, when the volume changing mechanism 1002 is in the proximal position Z1, and
- the volume of said main chamber 10.

Such defined internal volume Vo is determined by: $Vo = Vref * \left(P2-Pc\right) / \left(P1-P2\right)$ wherein Pc = P00 + (P0y - P00y).

In an embodiment, said volumetric displacement calibration device 1 comprises second calculation means designed to be able to calculate a calibrated displacement volume dV of the suction system 1000. This calibrated displacement volume dV is determined by: $dV = Vo * \left(P1-P0\right) / P 0 .$

In an embodiment, intended to determine volume leaks of the volumetric displacement calibration device 1, the first pressure sensor 12 is arranged to be able to measure a pressure P11 at a predetermined time t after the measurement of P1 and before opening the valve 102. In such an embodiment, the volumetric displacement calibration device 1 comprises third calculation means designed to be able to calculate a volume leak F of the device 1. The volume leak F is determined by: $F = Vo * \left(P1-P11\right) / \left(P0*t\right) .$

In an advantageous embodiment, the volumetric displacement calibration device 1 is configured to be able to adapt n suction systems 1000₁, 1000₂,..., 1000ₖ, 1000ₙ₋₁, 1000ₙ, and comprises:
- n main chambers 10₁, 10₂,...,10ₖ,..., 10ₙ₋₁, 10ₙ , each of them being configured to be adapted to one of n suction systems 1000- 1000ₙ;
- n first pressure sensors 12₁, 12₂,...,12ₖ,..., 12ₙ₋₁, 12ₙ ,
each first pressure sensor being connected to one main chamber 10₁-10ₙ.

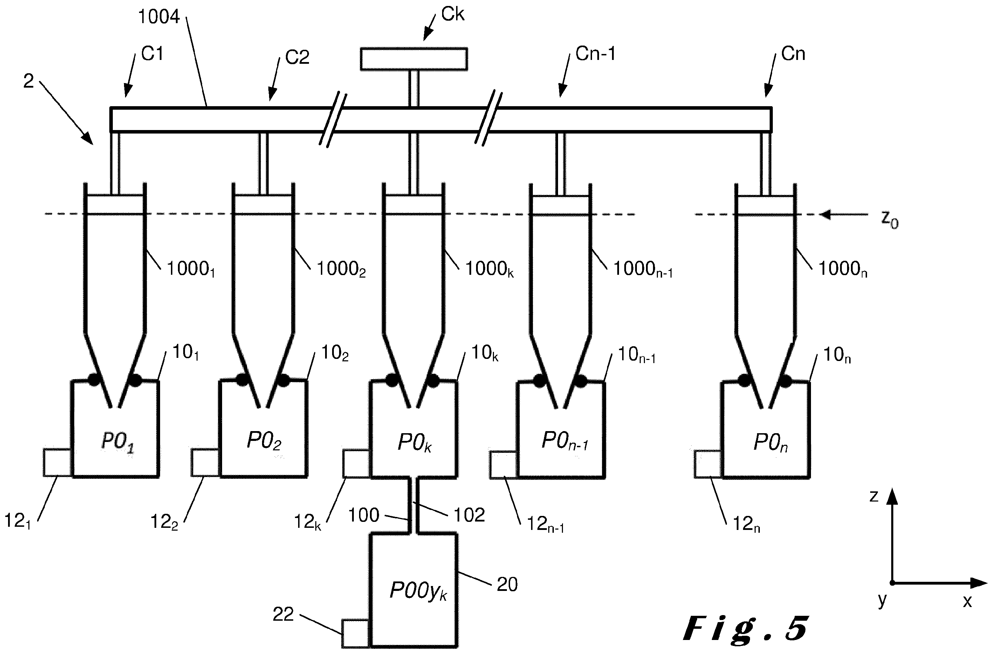

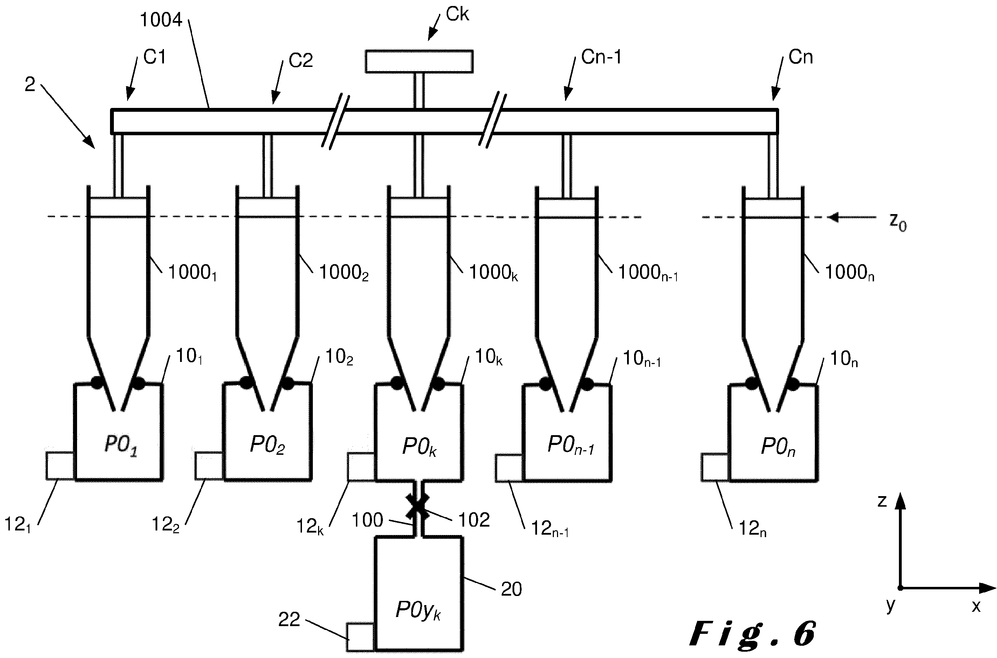

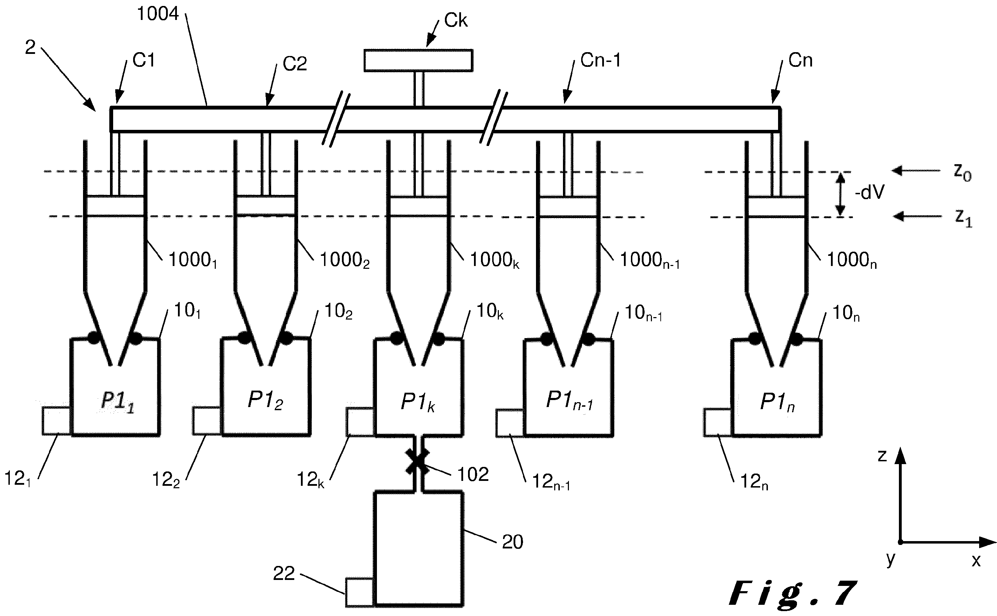

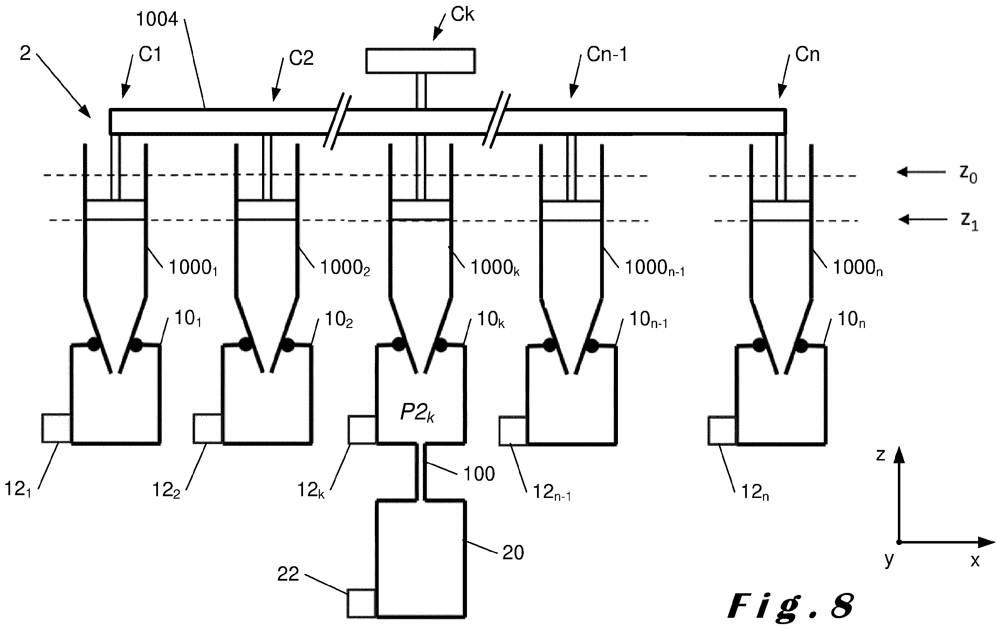

As will be described further, a volumetric displacement calibration system 2 defines a plurality of system channels C1-Cn. One of the system channels is predetermined as the key system channel Ck. Each comprises a main chamber 10₁, 10₂,...,10ₖ,..., 10ₙ₋₁, 10ₙ. However, there is, in such a system 2, only one channel that is defined as a key channel Ck, which is the only channel in the system 2 that comprises said reference chamber 20, as illustrated in Figures 5-8.

More precisely, in said embodiment wherein the volumetric displacement calibration device 1 is configured to be able to adapt n suction systems 1000₁, 1000₂, ..., 1000ₖ, ..., 1000ₙ₋₁, 1000ₙ, only one of the n main chambers 10-10ₙ is connected to said reference chamber 20 by a conduct 100. Any main chamber 10-10ₙ of the n chambers may be chosen to be used as the main test chamber 10 and be connected to the unique reference chamber 20 of the calibration device 1. The main test channel 10ₖ is defined as the k'th main chamber, k being chosen among any predetermined number from 1 to n.

In the embodiment illustrated in Figures 5 to 8, the main test chamber 10ₖ is chosen as that k'th main test chamber. Said main test chamber 10ₖ, in the embodiments of the Figures 5 to 8, is connected to said unique reference chamber 20. The main test chamber 10ₖ and the unique reference chamber measure pressures, illustrated in the steps shown in Figures 5 to 8, and able to determine said internal volume Vo.

In said embodiment comprising n identical main chambers, said second calculation means allow to determine a parameter Vok which has the dimension of a volume and defined as an internal volume and is the sum of the volume VPₖ of the tip of the k'th suction system 1000ₖ, the residual volume of the shaft when the volume reduction mechanism 1004 is in the proximal position Z1 and the volume of the test chamber 10k, and determined by: $Vok = Vref * \left(P2k-Pck\right) / \left(P1k-P2k\right) ,$ Pck being determined by : $Pck = P 00 k + \left(P0yk-P00yk\right) .$

Similar to the embodiment of a single channel as described before, Vok is a parameter that is defined as an internal volume defined for said key channel Ck of the system 2, and is the sum of the following 3 volumes:
- the volume VP of the aspiration tip of the suction system 1000 in said channel Ck;
- the reduced volume 1005 of the shaft 1003, of the suction system 1000 in said channel Ck, when its volume change mechanism 1002 is in the distal position Z0, and
- the volume of the k'th main test chamber 10ₖ.

In an embodiment, said volumetric displacement calibration device 1 comprises second calculation means designed to be able to calculate a calibrated displacement volume dVk of the suction system 1000 in said channel Ck. This calibrated displacement volume dVk is determined by: $dVk = Vok * \left(P1k-P0k\right) / P 0 k$ k being a predetermined number chosen as one of 1 to n.

In said embodiment, in which all main chambers 10₁, 10₂,...,10ₖ,..., 10ₙ₋₁, 10ₙ in the device 1 have the same volume, the displacement volumes dVi of all the n suction systems 1000- 1000ₙ is given by: $dVi = Vok * \left(P1i-P0i\right) / P 0 i ,$ wherein 1≤i≤n.

In an embodiment in which not all volumes of the main chambers 10₁, 10₂,...,10ₖ,..., 10ₙ₋₁, 10ₙ are identical, the difference Δi of volumes of main chambers of all channels C1-Cn, referred to the test channel Ck are taken into account and are provided in a first lookup table.

Table 1 illustrates a typical first lookup table.

**Table 1: an exemplary first lookup table in which the channel 5 is the key channel, corresponding to k=5**

| **I** | **1** | **2** | **3** | **4** | **5*** | **6** | **7** | **8** |
|---|---|---|---|---|---|---|---|---|
| Δi | 13µl | 11µl | 12µl | 14µl | 0µl | 11µl | 13µl | 12µl |

The volume displacements dVi in each channel C1-Cn is computed by said second calculation means, and is determined as: $dVi = \left(Vok-Δi\right) * \left(P1i-P0i\right) / P 0 i ,$ wherein 1≤i≤n.

Herein Δi, 1≤i≤n, is given by said first lookup table, illustrated in table 1, comprising the differences Δi of the internal volumes of the n-1 main chambers 10₁-10ₙ, relative to the volume of said test chamber 10, being the k'th chamber in the embodiment of Figures 5 to 8.

The pressure P1i is the pressure measured in the i-th main chamber 10₁-10ₙ, wherein 1≤i≤n, when the volume change mechanism 1004 is in said proximal position Z1 and the valve 102 closed.

The pressure P0i is the pressure measured in the i-th main chamber 10₁-10ₙ, wherein 1≤i≤n, when the volume change mechanism 1004 is in the distal position Z1 and the valve 102 closed.

In variants, the n main chambers 10₁-10ₙ may be arranged in a linear configuration, in the X or Y direction or in a 2D configuration, i.e. in an X-Y plane.

In embodiments, said n first pressure sensors 12₁-12₅, connected to the other n-1 chambers, are arranged to measure a pressure P11i wherein 1≤i≤n, measured at a predetermined time t after the measurement of P1i, wherein 1≤i≤n and before opening the valve 102. In such embodiments intended to determine leaks, said third calculation means are designed to be able to calculate the volume leaks Fi of the device 1, wherein 1≤i≤n.

In embodiments wherein all the main chambers 10-10ₙ have the same volume the leaks Fi are determined by: $Fi = Vok * \left(P1i-P11i\right) / \left(P0i*t\right) ,$ wherein 1≤i≤n.

In embodiments wherein all main chambers 10₁-10ₙ may have different volumes, the leaks Fi are determined by: $Fi = \left(Vok-Δi\right) * \left(P1i-P11i\right) / \left(P0i*t\right) ,$ wherein 1≤i≤n.

In embodiments, the volumetric displacement calibration device 1 takes into account the liquid height that induces a hydrostatic pressure due to liquid column height. This is useful If other tips than those used during the gravimetric (or dilution) calibration are used, as the effective delivered volume will deviate for the calibrated value. For a same quantity of liquid that is aspirated in the tip, the height reached by the liquid will, for example, be higher in a long and narrow tip than in short tip, both tips having the same nominal volume. This liquid height induces a hydrostatic pressure due to liquid column height and therefore induces a small, but not negligible, offset dVc between the effective aspirated volume VL and the true displacement volume of the piston of the pipette.

In such an embodiment, the calibration device 1 comprises a second look-up table which contains the information of the liquid heights hi for different models of aspiration tips 1006 and for each defined liquid volume VL to be tested. In such an embodiment, the volumetric displacement calibration device 1 comprising fourth calculation means that are designed to be able to calculate a volumetric compensation Vci of the gravimetric effect, for all of the aspiration tips.

The volumetric compensation Vci of the gravimetric effect is determined by knowing the parameter Vo and by taking into account said second look-up table h(a,b). Such a second lookup table has two dimensions: tip models and the test volumes, in percentage of the nominal tip volumes.

In the table h(a,b), a is the nominal volume of the pipette and b the tested volume. The values of b and y are entered by the user into a test machine before performing a calibration.

**Table 2: an exemplary second look-up table h(a,b)**

| **a \ b** | **100% VL** | **50% VL** | **10% VL** |
|---|---|---|---|
| **TIP 1000µl** | 50 mm | 34 mm | 17 mm |
| **TIP 200µl** | 40 mm | 29 mm | 10 mm |
| **TIP 100µl** | 29 mm | 22 mm | 10 mm |
| **TIP 20µl** | 22 mm | 14.5 mm | 6.5 mm |
| **TIP 10µl** | 14.5 mm | 10 mm | 4.5 mm |

In an embodiment of a system 2 with a single test channel, the volumetric compensation Vc of the gravimetric effect is determined by: $Vc = - h \left(a, b\right) * w * g * Vo / P 0 ,$ wherein a covers the ranges of tip sizes and b covers the range of tested volumes in each size.

The displaced volume is the determined by: $VL = dV - Vc .$

In an embodiment of a system 2 with a plurality of test channels C1-Cn, the volumetric compensation Vc of the gravimetric effect is determined by: $Vli = dVi - Vc ,$ wherein 0≤i≤n.

In another aspect, the invention is also achieved by a volumetric displacement calibration system 2 that comprises at least one volumetric displacement calibration device 1, as described herein, and at least one suction system 1000₁, 1000₂, ..., 1000ₖ, ..., 1000ₙ₋₁, 1000ₙ adapted to said at least one volumetric displacement calibration device 1. The suction systems 1000₁-1000ₙ are preferably pipettes but not necessarily so.

In an embodiment, illustrated in Figures 5 -8, a volumetric displacement calibration system 2 comprises n channels C1-Cn comprises a volume change mechanism 1004 which is common to all of said suction systems 1000₁, 1000₂, ..., 1000ₖ, ..., 1000ₙ₋₁, 1000ₙ. When a volumetric displacement calibration system 2 comprises n channels C1-Cn, there is still only one reference chamber 20 arranged to a n main chambers 10₁-10ₙ.

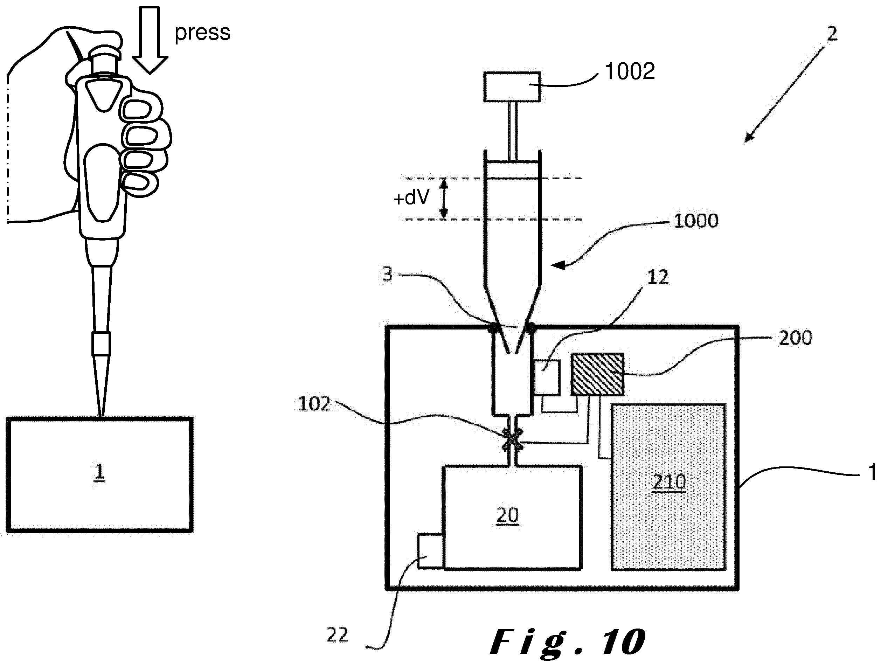

Figure 10 illustrates a volumetric displacement calibration system 2 comprising also a computer 210 and a display 200. The computer comprises means to enable to execute said first, second, third and fourth calculations.

In another aspect, the invention is also achieved by a method for calibrating a volumetric fluid handling system 2 and comprises successive steps (a-l), consisting of:
a) providing a volumetric displacement calibration device 1 as described herein;
b) connecting said suction system 1000 to said main chamber 10 while said valve 102 is in said open position;
c) measuring an initial pressure P00 in said main chamber 10 with said at least one first pressure sensor 12;
d) measuring an initial pressure P00y in said second chamber 20 with said second pressure sensor 20;
e) close said valve 102;
f) measuring the pressure P0 in said main chamber 10 with said at least one first pressure sensor 12;
g) measuring the pressure P0y in said reference chamber 20 with said second pressure sensor 22;
h) lowering the volume change mechanism 1002 by a predetermined stroke ΔZ and reducing the volume of air in said suction system 1000;
i) measuring the pressure P1 in said main chamber 10 with said at least one first pressure sensor 12;
j) opening said valve 102;
k) measuring the pressure P2 in said main chamber 10 with said at least one first pressure sensor 12;
l) determining an internal volume Vo, being a parameter that is the sum of the volume VP of said aspiration tip 2006, the residual volume 1005 of the shaft 1003 and the volume of said main chamber 10. This internal Vo is determined by: $Vo = Vref * \left(P2-Pc\right) / \left(P1-P2\right) ,$ wherein Pc=P00+(P0y - P00y).

In an advantageous embodiment, the method comprises a step m) of determining the calibrated displacement volume dV, calculated by dV= Vo * (P1 - P0)/P0.

In an embodiment, intended to measure leaks, the method comprises a step n), after step i, of measuring the pressure P11 in said first chamber 12, after a predetermined time t, with said valve 102 closed, the volume leak F being determined by the relationship: $F = Vo * \left(P1-P11\right) / \left(P0*t\right) .$

In embodiments, the method for calibrating a volumetric fluid handling system 2 comprising a plurality of n suction systems 1000₁-1000ₙ, comprises successive steps (a'-m') consisting of:
a') providing a volumetric displacement calibration device 1 comprising n main chambers 10₁, 10₂,...,10ₖ,..., 10ₙ₋₁, 10ₙ as described and defining one of the suction systems 1000₁-1000ₙ as the k'th and key test suction system 1000. In Figures 5-8 the k'th chamber 10ₖ is the test main chamber. The number k is chosen among one of 1 to n. The volumetric fluid handling system defines measurement channels C1-Cn. Each channel comprises a suction system 1000-1000ₙ connected to a main chamber10₁, 10₂,...,10ₖ,..., 10ₙ₋₁, 10ₙ ;
b') providing a first look-up table, as described herein, comprising the differences Δi, wherein 1≤i≤n- of the internal volumes of the n main chambers, relative to the volume of said test chamber 10ₖ;
c') connecting all the suction systems 1000₁, 1000₂, ..., 1000ₖ, ..., 1000ₙ₋₁, 1000ₙ to the main chambers 10₁, 10₂,...,10ₖ,..., 10ₙ₋₁, 10ₙ while said valve 102 is in said open position, the k'th test suction system 1000 being connected to the k'th test chamber 10ₖ which is connected to said reference chamber 20 by a conduct 100;
d') measuring an initial pressure P00k in said k'th test chamber 10ₖ with said at least one first pressure sensor 12ₖ;
e') measuring an initial pressure P00yk in said reference chamber 20 with said second pressure sensor 20;
f') closing said valve 102;
g') measuring the pressure P0k in said k'th test chamber 10ₖ with said at least one first pressure sensor 12ₖ;
h') measuring the pressure P0yk in said reference chamber 20 with said second pressure sensor 22;
i') lowering the volume change mechanisms of all the suction systems 1000-1000^{v} by a common volume change mechanism 2004 and by a predetermined stroke ΔZ and reducing the volume of air in all of said suction systems 1000₁, 1000₂, ..., 1000ₖ, ..., 1000ₙ₋₁, 1000ₙ ;
j') measuring the pressure P1k in said test chamber 10ₖ with said at least one first pressure sensor 12;
k') opening said valve 102;
I') measuring the pressure P2k in said test chamber 10ₖ with said at least one first pressure sensor 12ₖ;
m') determining an internal volume Vok, being the sum of the volume of the k'th tip, the volume of the k'th shaft when the volume change mechanism is in the distal position Z0, and the volume of said k'th main chamber 10.
The internal volume VoK is determined by: $Vok = Vref * \left(P2k-Pck\right) / \left(P1k-P2k\right) ,$ wherein Pck=P00k+(P0yk - P00yk).

In embodiments, the method comprises a step n') consisting in determining the calibrated displacement volume dV of the test suction system, calculated by dVk= Vok * (P1k - P0k)/P0k, and determining the calibrated displacement volumes dVi, wherein 1≤i≤n, of all the other suction system 1000₁-1000ₙ. This is preferably done by using said first look-up table, the volumes dVi being determined by: $dVi = \left(Vok-Δi\right) * \left(P1i-P0i\right) / P 0 i .$

In embodiments, wherein all main chambers 10₁-10ₙ have the same volume the method comprises the steps (o'-q') of:
- o') measuring the pressure P11 in the k'th main chamber 10ₖ, after a predetermined time t, with said valve 102 closed;
- p') measuring the pressures P11i in all the main chambers 10₁-10ₙ, at a predetermined time t after the measurement of P1i, and before opening the valve 102,
- q') calculating the volume leak Fi of all the main chambers 10₁-10ₙ, Fi being determined by: $Fi = Vok * \left(P1i-P11i\right) / \left(P0i*t\right) ,$ wherein 1≤i≤n.

As explained before, the pressure P1i is the pressure measured in the i-th main chamber 10₁-10ₙ, wherein 1≤i≤n, when the volume change mechanism 1004 is in said proximal position Z1 and the valve 102 closed. The pressure P2i is the pressure measured in the i-th main chamber 10₁-10ₙ, wherein 1≤i≤n, when the volume change mechanism 1004 is in the proximal position Z1 and the valve 102 opened.

In an embodiment, the method comprises a step r' consisting of providing a second look-up table which contains the information of the liquid heights hi for different models of aspiration tips 1006 and for each defined liquid volume VL to be tested, and calculating a volumetric compensation Vci of the gravimetric effect, by taking into account said second look-up table, as described herein, by: $Vc = - h \left(a, b\right) * w * g * Vo / P 0 .$

Said step r' comprises also the calculation of the corrected displaced volumes VLi being determined by: $VLi = dV - Vci ,$ wherein 0≤i≤n in the case of an embodiment of a system comprising a single test channel.

In an embodiment of a system 2 comprising a plurality of test channels C1-Cn, the volumetric compensation Vc of the gravimetric effect is determined by: $VLi = dVi - Vc ,$ wherein 0≤i≤n.

In embodiments, in order to improve further the precision of the calibration process, the different steps of measuring the pressures in the main chambers and the reference chamber may be repeated so that mean values may be obtained.

## Claims

1. A volumetric displacement calibration device (1) comprising at least one opening (3) configured to be able to adapt at least one suction system (1000), comprising a tip (1006), having a volume VP, connected to a shaft (1003) comprising a volume reduction mechanism (1002) arranged to be movable between a distal position Z0 and a proximal position Z1, the proximal position Z1 being closer to said opening (3) than said distal position Z1, the volumetric displacement calibration device (1) comprising :
- at least one main chamber (10) and one reference chamber (20), connected, by a conduct (100), to said main chamber (10);
- a valve (102) located on said conduct (100) and configured to be switchable between an open position, in which said main chamber (10) is in fluid communication with said reference chamber (20), and a closed position in which said main chamber (10) and said reference chamber (20) are not in fluid communication, the reference chamber (20) having a defined volume Vref when said valve (102) is closed;
- at least one first pressure sensor (12) connected to said main chamber (10) arranged to be able to measure:
- at least one pressure P00 measured in said main chamber (10) when the volume change mechanism (1002) is in said distal position Z0 and the valve (102) opened;
- at least one pressure P0 measured in said main chamber (10), when the volume change mechanism (1002) is in the distal position Z0 and the valve (102) closed;
- at least one pressure P1 measured in said main chamber (10), when the volume change mechanism (1002) is in said proximal position Z1 and the valve (102) closed, and
- at least one pressure P2 measured in said main chamber (10), when the volume change mechanism (1002) is in the proximal position Z1 and the valve (102) opened,
**characterized in that** said volumetric displacement calibration device (1) comprises:
- one second pressure sensor (22) connected to said reference chamber (20) and arranged to be able to measure:
- at least one pressure P00y measured in said reference chamber (20) when the volume change mechanism (1002) is in the distal position Z0 and the valve (102) opened;
- at least one pressure P0y measured in said reference chamber (20) when the volume change mechanism (1002) is in the distal position Z0, after closure of the valve (102); and
- first calculation means designed to be able to calculate an internal volume Vo which is the sum of the volume VP of said tip (1006), the residual volume (1005) of the shaft (1003) when the volume change mechanism (1002) is in the proximal position Z1 and the volume of said main chamber (10), said internal volume Vo being determined by: $Vo = Vref * \left(P2-Pc\right) / \left(P1-P2\right) ,$ wherein Pc = P00 + (P0y - P00y).

2. The volumetric displacement calibration device (1) according to claim 1, comprising second calculation means designed to be able to calculate a calibrated displacement volume dV of the suction system (1000), said calibrated displacement volume dV being determined by dV = Vo * (P1 - P0) / P0.

3. The volumetric displacement calibration device (1) according to claim 1 or 2, in which the first pressure sensor (12) is arranged to be able to measure a pressure P11 at a predetermined time t after the measurement of P1 and before opening the valve (102), said device (1) comprising third calculation means designed to be able to calculate a volume leak F of the device (1), said volume leak F being determined by: $F = Vo * \left(P1-P11\right) / \left(P0*t\right) .$

4. The volumetric displacement calibration device (1) according to any one of claims 1 to 3, configured to be able to adapt n suction systems (1000₁, 1000₂, ..., 1000ₖ, ..., 1000ₙ₋₁, 1000ₙ) and comprising:
- n main chambers (10₁, 10₂,...,10ₖ,..., 10ₙ₋₁, 10ₙ), each of them being configured to be adapted to one of n suction systems (1000- 1000ₙ);
- n first pressure sensors (12₁, 12₂,..., 12ₖ, ..., 12ₙ₋₁, 12ₙ), each first pressure sensor being connected to one main chamber (10₁-10ₙ);
wherein one of the n main chambers, being the k'th main chamber (10ₖ) is connected to said reference chamber (20) by the conduct (100), said k'th main chamber (10ₖ) connected to said reference chamber (20) being a test chamber, said k'th main chamber (10ₖ) being configured to be adapted to the k'th suction system (1000ₖ), the reference chamber (20) and the k'th main chamber (10ₖ) being configured to measured pressures in order to be able to determine a parameter Vok, which is the sum of the volume VPₖ of the tip of the k'th suction system (1000ₖ), and the residual volume of the shaft when the volume reduction mechanism (1004) is in the proximal position Z1 and the volume of the k'th main chamber (10ₖ), Vok being determined by : $Vok = Vref * \left(P2k-Pck\right) / \left(P1k-P2k\right) ,$
Pck being determined by : Pck = P00k + (P0yk - P00yk), wherein
- P00k is the pressure measured by the first pressure sensor (12k) in said k'th main chamber (10ₖ) when the volume change mechanism (1004) is in said distal position Z0 and the valve (102) opened;
- P0k is the pressure measured by the first pressure sensor (12k) in said k'th main chamber (10ₖ), when the volume change mechanism (1004) is in the distal position Z0 and the valve (102) closed;
- P1k is the pressure measured by the first pressure sensor (12k) in said k'th main chamber (10ₖ), when the volume change mechanism (1004) is in said proximal position Z1 and the valve (102) closed;
- P2k is the pressure measured by the first pressure sensor (12k) in said k'th main chamber (10ₖ), when the volume change mechanism (1004) is in the proximal position Z1 and the valve (102) opened;
- P00yk is the pressure measured by the second pressure sensor (22) in said reference chamber (20) when the volume change mechanism (1004) is in the distal position Z0 and the valve (102) opened; and
- P0yk is the pressure measured by the second pressure sensor (22) in said reference chamber (20) when the volume change mechanism (1004) is in the distal position Z0, after closure of the valve (102).

5. The volumetric displacement calibration device (1) according to claim 4, wherein said second calculation means are designed to be able to calculate the calibrated displacement volumes dVi:
- when all the suction systems (1000₁-1000ₙ) are connected to n identical main chambers (10₁-10ₙ), the volumes dVi are determined by: $dVik = Vok * \left(P1k-P0k\right) / P 0 k ,$ for said k'th suction system (1000ₖ) $dVi = Vok * \left(P1i-P0i\right) / P 0 i ,$ for the other suction systems (1000₁,...,1000ₙ)
- when the volumes of the main chambers (10₁-10ₙ) are not identical and their differences Δi, relative to the volume of the k'th main chamber (10ₖ), being provided by a first look-up table, the volumes dVi are determined by: $dVi = \left(Vok-Δi\right) * \left(P1i-P0i\right) / P 0 i ,$ wherein 1≤i≤n, and
P1i is the pressure measured in the i-th main chamber (10₁-10ₙ), wherein 1≤i≤n, when the compression mechanism (1004) is in said proximal position Z1 and the valve (102) closed, and
P0i is the pressure measured in the i-th main chamber (10₁-10ₙ), wherein 1≤i≤n, when the compression mechanism (1004) is in the distal position Z1 and the valve (102) closed.

6. The volumetric displacement calibration device (1) according to claim 4, in which said n first pressure sensors (12₁-12ₙ), are arranged to measure a pressure P11i, measured at a predetermined time t after the measurement of P1i, before opening the valve (102), the third calculation means being designed to be able to calculate the volume leaks Fi of the device (1), wherein 1≤i≤n and determined by: $Fi = Vok * \left(P1i-P11i\right) / \left(P0i*t\right) .$

7. The volumetric displacement calibration device (1) according to any one of claim 2 to 6, comprising a second look-up table h(a,b) which contains the information of the liquid heights for different models of aspiration tips (1006) and for each defined liquid volume VL to be tested, the device (1) comprising fourth calculation means being designed to be able to calculate a volumetric compensation Vci of the gravimetric effect, for all of said tips (1006), by taking into account said second look-up table, by the formula: $Vci = - h \left(a, b\right) * w * g * Vo / P 0 ;$ said fourth calculation means being designed to be able to calculate also corrected displaced volumes VLi determined by: $VLi = dVi - Vci ,$ wherein 0≤i≤n-1.

8. A volumetric displacement calibration system (2) comprising at least one volumetric displacement calibration device (1) according to any one of claims 1 to 7 and at least one suction system (1000₁, 1000₂, ..., 1000ₖ, ..., 1000ₙ₋₁, 1000ₙ) adapted to said at least one volumetric displacement calibration device (1).

9. The volumetric displacement calibration system (2) according to claim 8, comprising a volume reduction mechanism (1004) which is common to all of said suction systems (1000₁, 1000₂, ..., 1000ₖ, ..., 1000ₙ₋₁, 1000ₙ).

10. A method for calibrating a volumetric fluid handling system (2) comprising successive steps (a-l), consisting of:
a) providing a volumetric displacement calibration device (1) according to any one of claims 1 to 3;
b) connecting said suction system (1000) to said main chamber (10) while said valve (102) is in said open position;
c) measuring an initial pressure P00 in said main chamber (10) with said at least one first pressure sensor (12);
d) measuring an initial pressure P00y in said second chamber (20) with said second pressure sensor (20);
e) close said valve (102);
f) measuring the pressure P0 in said main chamber (10) with said at least one first pressure sensor (12);
g) measuring the pressure P0y in said reference chamber (20) with said second pressure sensor (22);
h) lowering the volume reduction mechanism (1002) by a predetermined stroke ΔZ and reducing the volume of air in said suction system (1000);
i) measuring the pressure P1 in said main chamber (10) with said at least one first pressure sensor (12);
j) opening said valve (102);
k) measuring the pressure P2 in said main chamber (10) with said at least one first pressure sensor (12);
l) determining an internal volume Vo, being a parameter being the sum of the volume VP of said aspiration tip (2006), the reduced volume (1005) of the shaft (1003) when the volume reduction mechanism (1002) is in said proximal position Z1 and the volume of said main chamber (10), Vo being determined by: $Vo = Vref * \left(P2-Pc\right) / \left(P1-P2\right) ,$ wherein Pc=P00+(P0y - P00y).

11. The method for calibrating a volumetric fluid handling system according to claim 10, comprising a step m) of determining the calibrated displacement volume dV, calculated by dV= Vo * (P1 - P0)/P0.

12. A method for calibrating a volumetric fluid handling system according to claim 10 or 11, comprising a step of determining a volume leak F, said method comprising a step n), after step i, of measuring the pressure P11 in said first chamber (12), after a predetermined time t, with said valve (102) closed, the volume leak F being determined by the relationship: F =Vo*(P1 - P11)/(PO*t).

13. A method for calibrating a volumetric fluid handling system comprising a plurality of suction systems (1000₁-1000ₙ), comprising successive steps (a'-n') consisting of:
a') providing a volumetric displacement calibration device (1) comprising n main chambers (10₁, 10₂,...,10ₖ,..., 10ₙ₋₁, 10ₙ) according to one of claims 4 to 9 and defining the k'th main chamber (10ₖ) as the test chamber;
b') providing a first look-up table comprising the differences Δi of the internal volumes of the n main chambers (10₁, 10ₙ) relative to the volume of said k'th main chamber (10ₖ),
c') connecting all the suction systems (1000₁, 1000₂, ..., 1000ₖ, ..., 1000ₙ₋₁, 1000ₙ) to the n main chambers (10₁, 10₂,...,10ₖ,..., 10ₙ₋₁, 10ₙ) while said valve (102) is in said open position, the test suction system (1000ₖ) being connected to the test chamber (10ₖ) which is connected to said reference chamber (20) by a conduct (100);
d') measuring an initial pressure P00k in said k'th main chamber (10ₖ) with the first pressure sensor (12ₖ) connected to said k'th main chamber (10ₖ);
e') measuring an initial pressure P00y in said reference chamber (20) with said second pressure sensor (20);
f') closing said valve (102);
g') measuring the pressure P0k in said k'th chamber (10ₖ) with the first pressure sensor (12ₖ) connected to said k'th main chamber (10ₖ);
h') measuring the pressure P0yk in said reference chamber (20) with said second pressure sensor (22);
i') lowering the volume reduction mechanisms of all the suction systems (1000₁-1000ₙ) by a common volume reduction mechanism (2004) and by a predetermined stroke ΔZ and reducing the volume of air in all of said suction systems (1000₁, 1000₂, ..., 1000ₖ, ..., 1000ₙ₋₁, 1000ₙ);
j') measuring the pressure P1k in said k'th main chamber (10ₖ) with the first pressure sensor (12ₖ) connected to said k'th main chamber (10ₖ);
k') opening said valve (102);
l') measuring the pressure P2k in said k'th main chamber (10ₖ) with the first pressure sensor (12ₖ) connected to said k'th main chamber (10ₖ);
m') determining the parameter Vok, which is the sum of the volume VPₖ of the tip of the k'th suction system (1000ₖ), the residual volume of the shaft when the volume reduction mechanism (1004) is in the proximal position Z1 and the volume of said k'th main chamber (10ₖ), determined by: $Vok = Vref * \left(P2k-Pck\right) / \left(P1-P2\right) ,$ wherein Pck=P00k+(P0yk - P00yk);
n') optionally but preferably determining the calibrated displacement volume dV of the k'th test suction system, calculated by dVk= Vok * (P1k - P0k)/P0k, and determining the calibrated displacement volumes dVi, wherein 1≤i≤n of all the other suction system (1000₁-1000ₙ), by using said first look-up table, the volumes dVi being determined by: $dVi = \left(Vok-Δi\right) * \left(P1i-P0i\right) / P 0 i .$

14. The method according to claim 13, comprising the steps (o'-q') of:
- o') measuring the pressure P11 in the k'th main chamber (10ₖ), after a predetermined time t, with said valve (102) closed;
- p') measuring the pressures P11i in all main chambers (10₁-10ₙ), at a predetermined time t after the measurement of P1i, wherein 1≤i≤n, and before opening the valve (102),
- q') calculating the volume leaks Fi of all main chambers (10₁-10ₙ), Fi being determined by: $Fi = Vok * \left(P1i-P11i\right) / \left(P0i*t\right) ,$ wherein 1≤i≤n.

15. The method according to any one of claims 10 to 14, comprising a step r' consisting of providing a second look-up table which contains the information of the liquid heights hi for different models of aspiration tips (1006) and for each defined liquid volume VL to be tested, and calculating a volumetric compensation Vci of the gravimetric effect, by taking into account said second look-up table by: $Vci = - hi * w * g * Vo / P 0 ;$ and calculating corrected displaced volumes VLᵢ being determined by: ${VL}_{i} = {dV}_{i} - Vci ,$ wherein 0≤i≤n.

## Patentansprüche

1. Volumenverdrängungs-Kalibriereinrichtung (1), umfassend mindestens eine Öffnung (3), die derart gestaltet ist, dass sie an mindestens ein Saugsystem (1000) angepasst werden kann, das eine Spitze (1006) mit einem Volumen VP umfasst, die mit einem Schaft (1003) verbunden ist, der einen Volumenreduktionsmechanismus (1002) umfasst, der dazu eingerichtet ist, zwischen einer distalen Position Z0 und einer proximalen Position Z1 bewegbar zu sein, wobei die proximale Position Z1 näher an der Öffnung (3) liegt als die distale Position Z1, wobei die Volumenverdrängungs-Kalibriereinrichtung (1) Folgendes umfasst:
- mindestens eine Hauptkammer (10) und eine Referenzkammer (20), die über eine Leitung (100) mit der Hauptkammer (10) verbunden ist;
- ein Ventil (102), das sich auf der Leitung (100) befindet und derart gestaltet ist, dass es zwischen einer geöffneten Stellung, in der die Hauptkammer (10) in Fluidverbindung mit der Referenzkammer (20) steht, und einer geschlossenen Stellung, in der die Hauptkammer (10) und die Referenzkammer (20) nicht in Fluidverbindung stehen, umschaltbar ist, wobei die Referenzkammer (20) ein definiertes Volumen Vref aufweist, wenn das Ventil (102) geschlossen ist;
- mindestens einen mit der Hauptkammer (10) verbundenen ersten Drucksensor (12), der derart eingerichtet ist, dass er Folgendes messen kann:
- mindestens einen Druck P00, der in der Hauptkammer (10) gemessen wird, wenn sich der Volumenänderungsmechanismus (1002) in der distalen Position Z0 befindet und das Ventil (102) geöffnet ist;
- mindestens einen Druck P0, der in der Hauptkammer (10) gemessen wird, wenn sich der Volumenänderungsmechanismus (1002) in der distalen Position Z0 befindet und das Ventil (102) geschlossen ist;
- mindestens einen Druck P1, der in der Hauptkammer (10) gemessen wird, wenn sich der Volumenänderungsmechanismus (1002) in der proximalen Position Z1 befindet und das Ventil (102) geschlossen ist, und
- mindestens einen Druck P2, der in der Hauptkammer (10) gemessen wird, wenn sich der Volumenänderungsmechanismus (1002) in der proximalen Position Z1 befindet und das Ventil (102) geöffnet ist,
**dadurch gekennzeichnet, dass** die Volumenverdrängungs-Kalibriereinrichtung (1) Folgendes umfasst:
- einen zweiten Drucksensor (22), der mit der Referenzkammer (20) verbunden und derart eingerichtet ist, dass er Folgendes messen kann:
- mindestens einen Druck P00y, der in der Referenzkammer (20) gemessen wird, wenn sich der Volumenänderungsmechanismus (1002) in der distalen Position Z0 befindet und das Ventil (102) geöffnet ist;
- mindestens einen Druck P0y, der in der Referenzkammer (20) gemessen wird, wenn sich der Volumenänderungsmechanismus (1002) nach dem Schließen des Ventils (102) in der distalen Position Z0 befindet; und
- ein erstes Berechnungsmittel, das derart konzipiert ist, dass es ein Innenvolumen Vo berechnen kann, bei dem es sich um die Summe aus dem Volumen VP der Spitze (1006), dem Restvolumen (1005) des Schafts (1003), wenn sich der Volumenänderungsmechanismus (1002) in der proximalen Position Z1 befindet, und dem Volumen der Hauptkammer (10) handelt, wobei das Innenvolumen Vo bestimmt wird durch: $Vo = Vref * \left(P2-Pc\right) / \left(P1-P2\right) ,$ wobei gilt: Pc = P00 + (P0y - P00y).

2. Volumenverdrängungs-Kalibriereinrichtung (1) nach Anspruch 1, umfassend ein zweites Berechnungsmittel, das derart konzipiert ist, dass es ein kalibriertes Verdrängungsvolumen dV des Saugsystems (1000) berechnen kann, wobei das kalibrierte Verdrängungsvolumen dV durch dV = Vo * (P1 - P0) / P0 bestimmt wird.

3. Volumenverdrängungs-Kalibriereinrichtung (1) nach Anspruch 1 oder 2, wobei der erste Drucksensor (12) derart eingerichtet ist, dass er einen Druck P11 zu einem vorgegebenen Zeitpunkt t nach der Messung von P1 und vor dem Öffnen des Ventils (102) messen kann, wobei die Einrichtung (1) ein drittes Berechnungsmittel umfasst, das derart konzipiert ist, dass es eine Volumenleckage F der Einrichtung (1) berechnen kann, wobei die Volumenleckage F bestimmt wird durch: $F = Vo * \left(P1-P11\right) / \left(P0*t\right) .$

4. Volumenverdrängungs-Kalibriereinrichtung (1) nach einem der Ansprüche 1 bis 3, die derart gestaltet ist, dass sie an n Saugsysteme (1000₁, 1000₂, ..., 1000ₖ, ..., 1000ₙ₋₁, 1000ₙ) angepasst werden kann, und Folgendes umfasst:
- n Hauptkammern (10₁, 10₂,..., 10ₖ,..., 10ₙ₋₁, 10ₙ), von denen jede derart gestaltet ist, dass sie an eines der n Saugsysteme (1000- 1000ₙ) angepasst werden kann;
- n erste Drucksensoren (12₁, 12₂,..., 12ₖ,..., 12ₙ₋₁, 12ₙ), wobei jeder erste Drucksensor mit einer Hauptkammer (10₁-10ₙ) verbunden ist;
wobei eine der n Hauptkammern, bei der es sich um die k-te Hauptkammer (10ₖ) handelt, über die Leitung (100) mit der Referenzkammer (20) verbunden ist, wobei die k-te Hauptkammer (10ₖ), die mit der Referenzkammer (20) verbunden ist, eine Prüfkammer ist, wobei die k-te Hauptkammer (10ₖ) dazu gestaltet ist, an das k-te Saugsystem (1000ₖ) angepasst zu werden, wobei die Referenzkammer (20) und die k-te Hauptkammer (10ₖ) zum Messen von Drücken ausgestaltet sind, um einen Parameter Vok bestimmen zu können, bei dem es sich um die Summe aus dem Volumen VPₖ der Spitze des k-ten Saugsystems (1000ₖ) und dem Restvolumen des Schafts, wenn sich der Volumenreduktionsmechanismus (1004) in der proximalen Position Z1 befindet, und dem Volumen der k-ten Hauptkammer (10ₖ) handelt, wobei Vok bestimmt wird durch: $Vok = Vref * \left(P2k-Pck\right) / \left(P1k-P2k\right) ,$
wobei Pck bestimmt wird durch: Pck = P00k + (P0yk - P00yk), wobei gilt:
- P00k ist der Druck, der vom ersten Drucksensor (12k) in der k-ten Hauptkammer (10ₖ) gemessen wird, wenn sich der Volumenänderungsmechanismus (1004) in der distalen Position Z0 befindet und das Ventil (102) geöffnet ist;
- P0k ist der Druck, der vom ersten Drucksensor (12k) in der k-ten Hauptkammer (10ₖ) gemessen wird, wenn sich der Volumenänderungsmechanismus (1004) in der distalen Position Z0 befindet und das Ventil (102) geschlossen ist;
- P1k ist der Druck, der vom ersten Drucksensor (12k) in der k-ten Hauptkammer (10ₖ) gemessen wird, wenn sich der Volumenänderungsmechanismus (1004) in der proximalen Position Z1 befindet und das Ventil (102) geschlossen ist;
- P2k ist der Druck, der vom ersten Drucksensor (12k) in der k-ten Hauptkammer (10ₖ) gemessen wird, wenn sich der Volumenänderungsmechanismus (1004) in der proximalen Position Z1 befindet und das Ventil (102) geöffnet ist;
- P00yk ist der Druck, der vom zweiten Drucksensor (22) in der Referenzkammer (20) gemessen wird, wenn sich der Volumenänderungsmechanismus (1004) in der distalen Position Z0 befindet und das Ventil (102) geöffnet ist; und
- P0yk ist der Druck, der vom zweiten Drucksensor (22) in der Referenzkammer (20) gemessen wird, wenn sich der Volumenänderungsmechanismus (1004) nach dem Schließen des Ventils (102) in der distalen Position Z0 befindet.

5. Volumenverdrängungs-Kalibriereinrichtung (1) nach Anspruch 4, wobei das zweite Berechnungsmittel derart konzipiert ist, dass es die kalibrierten Verdrängungsvolumina dVi berechnen kann:
- wenn alle Saugsysteme (1000₁-1000ₙ) mit n identischen Hauptkammern (10₁ - 10ₙ) verbunden sind, wobei die Volumina dVi bestimmt werden durch: $dVik = Vok * \left(P1k-P0k\right) / P 0 k ,$ für das k-te Saugsystem (1000ₖ) $dVi = Vok * \left(P1i-P0i\right) / P 0 i ,$ für die anderen Saugsysteme (1000₁,..., 1000ₙ)
- wenn die Volumina der Hauptkammern (10₁-10ₙ) nicht gleich sind und ihre Differenzen Δi, bezogen auf das Volumen der k-ten Hauptkammer (10ₖ), von einer ersten Nachschlagetabelle bereitgestellt werden, wobei die Volumina dVi bestimmt werden durch: $dVi = \left(Vok-Δi\right) * \left(P1i-P0i\right) / P 0 i ,$ wobei 1≤i≤n und wobei P1i der in der i-ten Hauptkammer (10₁-10ₙ) gemessene Druck ist, wobei 1≤i≤n, wenn sich der Verdichtungsmechanismus (1004) in der proximalen Position Z1 befindet und das Ventil (102) geschlossen ist, und
wobei P0i der in der i-ten Hauptkammer (10₁-10ₙ) gemessene Druck ist, wobei 1≤i≤n, wenn sich der Verdichtungsmechanismus (1004) in der distalen Position Z1 befindet und das Ventil (102) geschlossen ist.

6. Volumenverdrängungs-Kalibriereinrichtung (1) nach Anspruch 4, wobei die n ersten Drucksensoren (12₁-12ₙ) dazu eingerichtet sind, einen Druck P11i zu messen, der zu einem vorgegebenen Zeitpunkt t nach der Messung von P1i und vor dem Öffnen des Ventils (102) gemessen wird, wobei das dritte Berechnungsmittel derart konzipiert ist, dass es die Volumenleckagen Fi der Einrichtung (1) berechnen kann, wobei 1≤i≤n und die Bestimmung erfolgt durch: $Fi = Vok * \left(P1i-P11i\right) / \left(P0i*t\right) .$

7. Volumenverdrängungs-Kalibriereinrichtung (1) nach einem der Ansprüche 2 bis 6, umfassend eine zweite Nachschlagetabelle h(a,b), die die Informationen über die Flüssigkeitshöhen für verschiedene Modelle von Saugspitzen (1006) und für jedes zu prüfende definierte Flüssigkeitsvolumen VL enthält, wobei die Einrichtung (1) ein viertes Berechnungsmittel umfasst, das derart konzipiert ist, dass es für alle Spitzen (1006) unter Berücksichtigung der zweiten Nachschlagetabelle mit der folgenden Formel einen volumetrischen Ausgleich Vci der Gravitationswirkung berechnen kann: $Vci = - h \left(a, b\right) * w * g * Vo / P 0 ;$ wobei das vierte Berechnungsmittel derart konzipiert ist, dass es auch korrigierte verdrängte Volumina VLi berechnen kann, die bestimmt werden durch: $VLi = dVi - Vci ,$ wobei 0≤i≤n-1.

8. Volumenverdrängungs-Kalibriersystem (2), umfassend mindestens eine Volumenverdrängungs-Kalibriereinrichtung (1) nach einem der Ansprüche 1 bis 7 und mindestens ein Saugsystem (1000₁, 1000₂, ..., 1000ₖ, ..., 1000ₙ₋₁, 1000ₙ), das an die mindestens eine Volumenverdrängungs-Kalibriereinrichtung (1) angepasst ist.

9. Volumenverdrängungs-Kalibriersystem (2) nach Anspruch 8, umfassend einen Volumenreduktionsmechanismus (1004), der allen Saugsystemen (1000₁, 1000₂, ..., 1000ₖ, ..., 1000ₙ₋₁, 1000ₙ) gemein ist.

10. Verfahren zum Kalibrieren eines volumetrischen Systems (2) zur Handhabung von Flüssigkeiten, umfassend aufeinanderfolgende Schritte (a-l), bestehend aus:
a) Bereitstellen einer Volumenverdrängungs-Kalibriereinrichtung (1) nach einem der Ansprüche 1 bis 3;
b) Verbinden des Saugsystems (1000) mit der Hauptkammer (10), während sich das Ventil (102) in der geöffneten Stellung befindet;
c) Messen eines Anfangsdrucks P00 in der Hauptkammer (10) mit dem mindestens einen ersten Drucksensor (12);
d) Messen eines Anfangsdrucks P00y in der zweiten Kammer (20) mit dem zweiten Drucksensor (20);
e) Schließen des Ventils (102);
f) Messen des Drucks P0 in der Hauptkammer (10) mit dem mindestens einen ersten Drucksensor (12);
g) Messen des Drucks P0y in der Referenzkammer (20) mit dem zweiten Drucksensor (22);
h) Absenken des Volumenreduktionsmechanismus (1002) um einen vorgegebenen Hub ΔZ und Verringern des Luftvolumens im Saugsystem (1000);
i) Messen des Drucks P1 in der Hauptkammer (10) mit dem mindestens einen ersten Drucksensor (12);
j) Öffnen des Ventils (102);
k) Messen des Drucks P2 in der Hauptkammer (10) mit dem mindestens einen ersten Drucksensor (12);
l) Bestimmen eines Innenvolumens Vo, bei dem es sich um einen Parameter handelt, der die Summe aus dem Volumen VP der Saugspitze (2006), dem reduzierten Volumen (1005) des Schafts (1003), wenn sich der Volumenreduktionsmechanismus (1002) in der proximalen Position Z1 befindet, und dem Volumen der Hauptkammer (10) ist, wobei Vo bestimmt wird durch: $Vo = Vref * \left(P2-Pc\right) / \left(P1-P2\right) ,$ wobei gilt: Pc=P00+(P0y - P00y).

11. Verfahren zum Kalibrieren eines volumetrischen Systems zur Handhabung von Flüssigkeiten nach Anspruch 10, umfassend einen Schritt m) des Bestimmens des kalibrierten Verdrängungsvolumens dV, berechnet nach dV= Vo * (P1 - P0)/P0.

12. Verfahren zum Kalibrieren eines volumetrischen Systems zur Handhabung von Flüssigkeiten nach Anspruch 10 oder 11, umfassend einen Schritt des Bestimmens einer Volumenleckage F, wobei das Verfahren nach Schritt i) einen Schritt n) des Messens des Drucks P11 in der ersten Kammer (12) nach einer vorgegebenen Zeit t bei geschlossenem Ventil (102) umfasst, wobei die Volumenleckage F durch die folgende Beziehung bestimmt wird: F =Vo*(P1 - P11)/(P0*t).

13. Verfahren zum Kalibrieren eines volumetrischen Systems zur Handhabung von Flüssigkeiten, umfassend eine Vielzahl von Saugsystemen (1000₁-1000ₙ), umfassend aufeinanderfolgende Schritte (a'-n'), bestehend aus:
a') Bereitstellen einer Volumenverdrängungs-Kalibriereinrichtung (1), die n Hauptkammern (10₁, 10₂,..., 10ₖ,..., 10ₙ₋₁, 10ₙ) umfasst, nach einem der Ansprüche 4 bis 9 und Definieren der k-ten Hauptkammer (10ₖ) als die Prüfkammer;
b') Bereitstellen einer ersten Nachschlagetabelle, umfassend die Differenzen Δi der Innenvolumina der n Hauptkammern (10₁, 10ₙ) bezogen auf das Volumen der k-ten Hauptkammer (10ₖ);
c') Verbinden aller Saugsysteme (1000₁, 1000₂, ..., 1000ₖ, ..., 1000ₙ₋₁, 1000ₙ) mit den n Hauptkammern (10₁, 10₂,..., 10ₖ,..., 10ₙ₋₁, 10ₙ), während sich das Ventil (102) in der geöffneten Stellung befindet, wobei das Prüfsaugsystem (1000ₖ) mit der Prüfkammer (10ₖ) verbunden ist, die über eine Leitung (100) mit der Referenzkammer (20) verbunden ist;
d') Messen eines Anfangsdrucks P00k in der k-ten Hauptkammer (10ₖ) mit dem ersten Drucksensor (12ₖ), der mit der k-ten Hauptkammer (10ₖ) verbunden ist;
e') Messen eines Anfangsdrucks P00y in der Referenzkammer (20) mit dem zweiten Drucksensor (20);
f') Schließen des Ventils (102);
g') Messen des Drucks P0k in der k-ten Kammer (10ₖ) mit dem ersten Drucksensor (12ₖ), der mit der k-ten Hauptkammer (10ₖ) verbunden ist;
h') Messen des Drucks P0yk in der Referenzkammer (20) mit dem zweiten Drucksensor (22);
i') Absenken der Volumenreduktionsmechanismen aller Saugsysteme (1000₁-1000ₙ) durch einen gemeinsamen Volumenreduktionsmechanismus (2004) und um einen vorgegebenen Hub ΔZ und Verringern des Luftvolumens in allen Saugsystemen (1000₁, 1000₂, ..., 1000ₖ, ..., 1000ₙ₋₁, 1000ₙ);
j') Messen des Drucks P1k in der k-ten Hauptkammer (10ₖ) mit dem ersten Drucksensor (12ₖ), der mit der k-ten Hauptkammer (10ₖ) verbunden ist;
k') Öffnen des Ventils (102);
l') Messen des Drucks P2k in der k-ten Hauptkammer (10ₖ) mit dem ersten Drucksensor (12ₖ), der mit der k-ten Hauptkammer (10ₖ) verbunden ist;
m') Bestimmen des Parameters Vok, der die Summe aus dem Volumen VPₖ der Spitze des k-ten Saugsystems (1000ₖ), dem Restvolumen des Schafts, wenn sich der Volumenreduktionsmechanismus (1004) in der proximalen Position Z1 befindet, und dem Volumen der k-ten Hauptkammer (10ₖ) ist, bestimmt durch: $Vok = Vref * \left(P2k-Pck\right) / \left(P1-P2\right) ,$ wobei gilt: Pck=P00k+(P0yk - P00yk);
n') wahlweise, aber vorzugsweise, Bestimmen des kalibrierten Verdrängungsvolumens dV des k-ten Prüfsaugsystems, berechnet nach dVk= Vok * (P1k - P0k)/P0k, und Bestimmen der kalibrierten Verdrängungsvolumina dVi, wobei 1≤i≤n, aller anderen Saugsysteme (1000₁-1000ₙ) unter Verwendung der ersten Nachschlagetabelle, wobei die Volumina dVi bestimmt werden durch: $dVi = \left(Vok-Δi\right) * \left(P1i-P0i\right) / P 0 i .$

14. Verfahren nach Anspruch 13, umfassend die folgenden Schritte (o'-q'):
- o') Messen des Drucks P11 in der k-ten Hauptkammer (10ₖ) nach einer vorgegebenen Zeit t bei geschlossenem Ventil (102);
- p') Messen der Drücke P11i in allen Hauptkammern (10₁-10ₙ) zu einem vorgegebenen Zeitpunkt t nach der Messung von P1i, wobei 1≤i≤n, und vor dem Öffnen des Ventils (102),
- q') Berechnen der Volumenleckagen Fi aller Hauptkammern (10₁-10ₙ), wobei Fi bestimmt wird durch:$Fi = Vok * \left(P1i-P11i\right) / \left(P0i*t\right) ,$ wobei 1≤i≤n.

15. Verfahren nach einem der Ansprüche 10 bis 14, umfassend einen Schritt r', bestehend aus dem Bereitstellen einer zweiten Nachschlagetabelle, die die Informationen über die Flüssigkeitshöhen hi für verschiedene Modelle von Saugspitzen (1006) und für jedes zu prüfende definierte Flüssigkeitsvolumen VL enthält, und Berechnen eines volumetrischen Ausgleichs Vci der Gravitationswirkung unter Berücksichtigung der zweiten Nachschlagetabelle nach: $Vci = - hi * w * g * Vo / PO ;$ und Berechnen korrigierter verdrängter Volumina VLᵢ, die bestimmt werden durch: ${VL}_{i} = {dV}_{i} - Vci ,$ wobei 0≤i≤n.

## Revendications

1. Dispositif d'étalonnage (1) par déplacement volumétrique comprenant au moins une ouverture (3) conçue pour pouvoir s'adapter à au moins un système d'aspiration (1000), comprenant une pointe (1006), présentant un volume VP, reliée à une tige (1003) comprenant un mécanisme de réduction de volume (1002) agencé pour être mobile entre une position distale Z0 et une position proximale Z1, la position proximale Z1 étant plus proche de ladite ouverture (3) que ladite position distale Z1, le dispositif d'étalonnage (1) par déplacement volumétrique comprenant :
- au moins une chambre principale (10) et une chambre de référence (20) reliée, par un conduit (100), à ladite chambre principale (10) ;
- une vanne (102) située sur ledit conduit (100) et conçue pour être commutable entre une position ouverte, dans laquelle ladite chambre principale (10) est en communication fluidique avec ladite chambre de référence (20), et une position fermée, dans laquelle ladite chambre principale (10) et ladite chambre de référence (20) ne sont pas en communication fluidique, la chambre de référence (20) présentant un volume défini Vref lorsque ladite vanne (102) est fermée ;
- au moins un premier capteur de pression (12) relié à ladite chambre principale (10) agencé pour pouvoir mesurer :
- au moins une pression P00 mesurée dans ladite chambre principale (10) lorsque le mécanisme de changement de volume (1002) est dans ladite position distale Z0 et la vanne (102) ouverte ;
- au moins une pression P0 mesurée dans ladite chambre principale (10), lorsque le mécanisme de changement de volume (1002) est dans la position distale Z0 et la vanne (102) fermée ;
- au moins une pression P1 mesurée dans ladite chambre principale (10), lorsque le mécanisme de changement de volume (1002) est dans ladite position proximale Z1 et la vanne (102) fermée et
- au moins une pression P2 mesurée dans ladite chambre principale (10), lorsque le mécanisme de changement de volume (1002) est dans la position proximale Z1 et la vanne (102) ouverte,
**caractérisé en ce que** ledit dispositif d'étalonnage (1) par déplacement volumétrique comprend :
- un second capteur de pression (22) relié à ladite chambre de référence (20) et agencé pour pouvoir mesurer :
- au moins une pression P00y mesurée dans ladite chambre de référence (20) lorsque le mécanisme de changement de volume (1002) est dans la position distale Z0 et la vanne (102) ouverte ;
- au moins une pression P0y mesurée dans ladite chambre de référence (20) lorsque le mécanisme de changement de volume (1002) est dans la position distale Z0, après fermeture de la vanne (102) ; et
- des premiers moyens de calcul conçus pour pouvoir calculer un volume interne Vo qui est la somme du volume VP de ladite pointe (1006), du volume résiduel (1005) de la tige (1003) lorsque le mécanisme de changement de volume (1002) est dans la position proximale Z1 et du volume de ladite chambre principale (10), ledit volume interne Vo étant déterminé par : $Vo = Vref * \left(P2-Pc\right) / \left(P1-P2\right) ,$ où Pc = P00 + (P0y - P00y).

2. Dispositif d'étalonnage (1) par déplacement volumétrique selon la revendication 1, comprenant des deuxièmes moyens de calcul conçus pour pouvoir calculer un volume de déplacement étalonné dV du système d'aspiration (1000), ledit volume de déplacement étalonné dV étant déterminé par dV = Vo * (P1 - P0) / P0.

3. Dispositif d'étalonnage (1) par déplacement volumétrique selon la revendication 1 ou 2, dans lequel le premier capteur de pression (12) est agencé pour pouvoir mesurer une pression P11 à un instant t prédéterminé après la mesure de P1 et avant l'ouverture de la vanne (102), ledit dispositif (1) comprenant des troisièmes moyens de calcul conçus pour pouvoir calculer une fuite volumique F du dispositif (1), ladite fuite volumique F étant déterminée par : $F = Vo * \left(P1-P11\right) / \left(P0*t\right) .$

4. Dispositif d'étalonnage (1) par déplacement volumétrique selon l'une quelconque des revendications 1 à 3, conçu pour pouvoir s'adapter à n systèmes d'aspiration (1000₁, 1000₂, ..., 1000ₖ, ..., 1000ₙ₋₁, 1000ₙ) et comprenant :
- n chambres principales (10₁, 10₂,...,10ₖ,..., 10ₙ₋₁, 10ₙ), chacune d'elles étant conçue pour être adaptée à l'un de n systèmes d'aspiration (1000 - 1000ₙ) ;
- n premiers capteurs de pression (12₁, 12₂,...,12ₖ,..., 12ₙ₋₁, 12ₙ), chaque premier capteur de pression étant relié à une chambre principale (10₁ - 10ₙ) ;
dans lequel l'une des n chambres principales, étant la k'ième chambre principale (10ₖ), est reliée à ladite chambre de référence (20) par le conduit (100), ladite k'ième chambre principale (10ₖ) reliée à ladite chambre de référence (20) étant une chambre de test, ladite k'ième chambre principale (10ₖ) étant conçue pour être adaptée au k'ième système d'aspiration (1000ₖ), la chambre de référence (20) et la k'ième chambre principale (10ₖ) étant conçues pour mesurer des pressions afin de pouvoir déterminer un paramètre Vok, qui est la somme du volume VPₖ de la pointe du k'ième système d'aspiration (1000ₖ), du volume résiduel de la tige lorsque le mécanisme de réduction de volume (1004) est dans la position proximale Z1 et du volume de la k'ième chambre principale (10ₖ), Vok étant déterminé par : $Vok = Vref * \left(P2k-Pck\right) / \left(P1k-P2k\right) ,$
Pck étant déterminé par : Pck = P00k + (P0yk - P00yk), où
- P00k est la pression mesurée par le premier capteur de pression (12k) dans ladite k'ième chambre principale (10ₖ) lorsque le mécanisme de changement de volume (1004) est dans ladite position distale Z0 et la vanne (102) ouverte ;
- P0k est la pression mesurée par le premier capteur de pression (12k) dans ladite k'ième chambre principale (10ₖ), lorsque le mécanisme de changement de volume (1004) est dans la position distale Z0 et la vanne (102) fermée ;
- P1k est la pression mesurée par le premier capteur de pression (12k) dans ladite k'ième chambre principale (10ₖ), lorsque le mécanisme de changement de volume (1004) est dans ladite position proximale Z1 et la vanne (102) fermée ;
- P2k est la pression mesurée par le premier capteur de pression (12k) dans ladite k'ième chambre principale (10ₖ), lorsque le mécanisme de changement de volume (1004) est dans la position proximale Z1 et la vanne (102) ouverte ;
- P00yk est la pression mesurée par le second capteur de pression (22) dans ladite chambre de référence (20) lorsque le mécanisme de changement de volume (1004) est dans la position distale Z0 et la vanne (102) ouverte ; et
- P0yk est la pression mesurée par le second capteur de pression (22) dans ladite chambre de référence (20) lorsque le mécanisme de changement de volume (1004) est dans la position distale Z0, après fermeture de la vanne (102).

5. Dispositif d'étalonnage (1) par déplacement volumétrique selon la revendication 4, dans lequel lesdits deuxièmes moyens de calcul sont conçus pour pouvoir calculer les volumes de déplacement étalonnés dVi :
- lorsque tous les systèmes d'aspiration (1000₁ - 1000ₙ) sont reliés à n chambres principales identiques (10₁ - 10ₙ), les volumes dVi sont déterminés par : $dVik = Vok * \left(P1k-P0k\right) / P 0 k ,$ pour ledit k'ième système d'aspiration (1000ₖ) $dVi = Vok * \left(P1i-P0i\right) / P 0 i ,$ pour les autres systèmes d'aspiration (1000₁, ... ,1000ₙ)
- lorsque les volumes des chambres principales (10₁ - 10ₙ) ne sont pas identiques et leurs différences Δi, par rapport au volume de la k'ième chambre principale (10ₖ), étant fournies par une première table de consultation, les volumes dVi sont déterminés par : $dVi = \left(Vok-Δi\right) * \left(P1i-P0i\right) / P 0 i ,$ où 1≤i≤n et
P1i est la pression mesurée dans la i-ième chambre principale (10₁ - 10ₙ), où 1≤i≤n, lorsque le mécanisme de compression (1004) est dans ladite position proximale Z1 et la vanne (102) fermée et
P0i est la pression mesurée dans la i-ième chambre principale (10₁ - 10ₙ), où 1≤i≤n, lorsque le mécanisme de compression (1004) est dans la position distale Z1 et la vanne (102) fermée.

6. Dispositif d'étalonnage (1) par déplacement volumétrique selon la revendication 4, dans lequel lesdits n premiers capteurs de pression (12₁-12ₙ) sont agencés pour mesurer une pression P11i, mesurée à un instant t prédéterminé après la mesure de P1i, avant l'ouverture de la vanne (102), les troisièmes moyens de calcul étant conçus pour pouvoir calculer les fuites volumiques Fi du dispositif (1), où 1≤i≤n, déterminées par : $Fi = Vok * \left(P1i-P11i\right) / \left(P0i*t\right) .$

7. Dispositif d'étalonnage (1) par déplacement volumétrique selon l'une quelconque des revendications 2 à 6, comprenant une seconde table de consultation h(a,b) qui contient les informations des hauteurs de liquide pour différents modèles de pointes d'aspiration (1006) et pour chaque volume de liquide VL défini à tester, le dispositif (1) comprenant des quatrièmes moyens de calcul conçus pour pouvoir calculer une compensation volumétrique Vci de l'effet gravimétrique, pour toutes lesdites pointes (1006), en tenant compte de ladite seconde table de consultation, par la formule : $Vci = - h \left(a, b\right) * w * g * Vo / P 0 ;$ lesdits quatrièmes moyens de calcul étant conçus pour pouvoir calculer également des volumes déplacés corrigés VLi déterminés par : $VLi = dVi - Vci ,$ où 0≤i≤n-1.

8. Système d'étalonnage (2) par déplacement volumétrique comprenant au moins un dispositif d'étalonnage (1) par déplacement volumétrique selon l'une quelconque des revendications 1 à 7 et au moins un système d'aspiration (1000₁, 1000₂, ..., 1000ₖ, ..., 1000ₙ₋₁, 1000ₙ) adapté audit au moins un dispositif d'étalonnage (1) par déplacement volumétrique.

9. Système d'étalonnage (2) par déplacement volumétrique selon la revendication 8, comprenant un mécanisme de réduction de volume (1004) qui est commun à tous lesdits systèmes d'aspiration (1000₁, 1000₂, ..., 1000ₖ, ..., 1000ₙ₋₁, 1000ₙ).

10. Procédé d'étalonnage d'un système de manipulation volumétrique (2) de fluide comprenant des étapes successives (a-l), consistant à :
a) fournir un dispositif d'étalonnage (1) par déplacement volumétrique selon l'une quelconque des revendications 1 à 3 ;
b) relier ledit système d'aspiration (1000) à ladite chambre principale (10) tandis que ladite vanne (102) est dans ladite position ouverte ;
c) mesurer une pression initiale P00 dans ladite chambre principale (10) par ledit au moins un premier capteur de pression (12) ;
d) mesurer une pression initiale P00y dans ladite seconde chambre (20) par ledit second capteur de pression (20) ;
e) fermer ladite vanne (102) ;
f) mesurer la pression P0 dans ladite chambre principale (10) par ledit au moins un premier capteur de pression (12) ;
g) mesurer la pression P0y dans ladite chambre de référence (20) par ledit second capteur de pression (22) ;
h) abaisser le mécanisme de réduction de volume (1002) d'une course prédéterminée ΔZ et réduire le volume d'air dans ledit système d'aspiration (1000) ;
i) mesurer la pression P1 dans ladite chambre principale (10) par ledit au moins un premier capteur de pression (12) ;
j) ouvrir ladite vanne (102) ;
k) mesurer la pression P2 dans ladite chambre principale (10) par ledit au moins un premier capteur de pression (12) ;
l) déterminer un volume interne Vo, étant un paramètre qui est la somme du volume VP de ladite pointe d'aspiration (2006), du volume réduit (1005) de la tige (1003) lorsque le mécanisme de réduction de volume (1002) est dans ladite position proximale Z1 et du volume de ladite chambre principale (10), Vo étant déterminé par : $Vo = Vref * \left(P2-Pc\right) / \left(P1-P2\right) ,$ où Pc = P00 + (P0y - P00y).

11. Procédé d'étalonnage d'un système de manipulation volumétrique de fluide selon la revendication 10, comprenant une étape m) de détermination du volume de déplacement étalonné dV, calculé par dV = Vo * (P1 - P0) / P0.

12. Procédé d'étalonnage d'un système de manipulation volumétrique de fluide selon la revendication 10 ou 11, comprenant une étape de détermination d'une fuite volumique F, ledit procédé comprenant une étape n), après l'étape i, de mesure de la pression P11 dans ladite première chambre (12), après un instant t prédéterminé, ladite vanne (102) étant fermée, la fuite volumique F étant déterminée par la relation : F = Vo * (P1 - P11) / (P0 * t).

13. Procédé d'étalonnage d'un système de manipulation volumétrique de fluide comprenant une pluralité de systèmes d'aspiration (1000₁ - 1000ₙ), comprenant des étapes successives (a'-n') consistant à :
a') fournir un dispositif d'étalonnage (1) par déplacement volumétrique comprenant n chambres principales (10₁, 10₂,...,10ₖ,..., 10ₙ₋₁, 10ₙ) selon l'une des revendications 4 à 9 et définissant la k'ième chambre principale (10ₖ) en tant que chambre de test ;
b') fournir une première table de consultation comprenant les différences Δi des volumes internes des n chambres principales (10₁, 10ₙ) par rapport au volume de ladite k'ième chambre principale (10ₖ) ;
c') relier tous les systèmes d'aspiration (1000₁, 1000₂, ..., 1000ₖ, ..., 1000ₙ₋₁, 1000ₙ) aux n chambres principales (10₁, 10₂,...,10ₖ,...,10ₙ₋₁, 10ₙ) tandis que ladite vanne (102) est dans ladite position ouverte, le système d'aspiration de test (1000ₖ) étant relié à la chambre de test (10ₖ) qui est reliée à ladite chambre de référence (20) par un conduit (100) ;
d') mesurer une pression initiale P00k dans ladite k'ième chambre principale (10ₖ) par le premier capteur de pression (12ₖ) relié à ladite k'ième chambre principale (10ₖ) ;
e') mesurer une pression initiale P00y dans ladite chambre de référence (20) par ledit second capteur de pression (20) ;
f') fermer ladite vanne (102) ;
g') mesurer la pression P0k dans ladite k'ième chambre (10ₖ) par le premier capteur de pression (12ₖ) relié à ladite k'ième chambre principale (10ₖ) ;
h') mesurer la pression P0yk dans ladite chambre de référence (20) par ledit second capteur de pression (22) ;
i') abaisser les mécanismes de réduction de volume de tous les systèmes d'aspiration (1000₁ - 1000ₙ) par un mécanisme de réduction de volume commun (2004) et par une course prédéterminée ΔZ et réduire le volume d'air dans tous lesdits systèmes d'aspiration (1000₁, 1000₂, ..., 1000ₖ, ..., 1000ₙ₋₁, 1000ₙ) ;
j') mesurer la pression P1k dans ladite k'ième chambre principale (10ₖ) par le premier capteur de pression (12ₖ) relié à ladite k'ième chambre principale (10ₖ) ;
k') ouvrir ladite vanne (102) ;
l') mesurer la pression P2k dans ladite k'ième chambre principale (10ₖ) par le premier capteur de pression (12ₖ) relié à ladite k'ième chambre principale (10ₖ) ;
m') déterminer le paramètre Vok, qui est la somme du volume VPₖ de la pointe du k'ième système d'aspiration (1000ₖ), du volume résiduel de la tige lorsque le mécanisme de réduction de volume (1004) est dans la position proximale Z1 et du volume de ladite k'ième chambre principale (10ₖ), déterminé par : $Vok = Vref * \left(P2k-Pck\right) / \left(P1-P2\right) ,$ où Pck = P00k + (P0yk - P00yk) ;
n') éventuellement mais de préférence déterminer le volume de déplacement étalonné dV du k'ième système d'aspiration de test, calculé par dVk= Vok * (P1k - P0k)/P0k et déterminer les volumes de déplacement étalonnés dVi, où 1≤i≤n, de tous les autres systèmes d'aspiration (1000₁ - 1000ₙ), à l'aide de ladite première table de consultation, les volumes dVi étant déterminés par : $dVi = \left(Vok-Δi\right) * \left(P1i-P0i\right) / P 0 i .$

14. Procédé selon la revendication 13, comprenant les étapes (o'-q') de :
- o') mesure de la pression P11 dans la k'ième chambre principale (10ₖ), après un instant t prédéterminé, ladite vanne (102) étant fermée ;
- p') mesure des pressions P11i dans toutes les chambres principales (10₁ - 10ₙ), à un instant t prédéterminé après la mesure de P1i, où 1≤i≤ n et avant l'ouverture de la vanne (102),
- q') calcul des fuites volumiques Fi de toutes les chambres principales (10₁ - 10ₙ), Fi étant déterminé par : Fi = Vok * (P1i - P11i) / (P0i * t), où 1≤i≤n.

15. Procédé selon l'une quelconque des revendications 10 à 14, comprenant une étape r' consistant à fournir une seconde table de consultation qui contient les informations des hauteurs de liquide hi pour différents modèles de pointes d'aspiration (1006) et pour chaque volume de liquide VL défini à tester et à calculer une compensation volumétrique Vci de l'effet gravimétrique, en tenant compte de ladite seconde table de consultation par : $Vci = - hi * w * g * Vo / P 0 ;$ et à calculer des volumes déplacés corrigés VLᵢ déterminés par : ${VL}_{i} = {dV}_{i} - Vci ,$ où 0≤i≤n.
